# FASCICULE DE BREVET EUROPEEN

(11) **EP 0 887 245 B1**
(45) Date de publication et mention de la délivrance du brevet: **04.10.2001**
(21) Numéro de dépôt: 98401407.6
(22) Date de dépôt: 10.06.1998
(51) Int. Cl.: B62D 1/18

(54) **Dispositif de maintien en position d'un système de serrage de deux éléments**
Vorrichtung zum Halten der Position eines Klemmsystems für zwei Elemente
Device for holding the position of a clamping system for two elements

(30) Priorité: 23.06.1997 FR 9707975
(43) Date de publication de la demande: 30.12.1998
(73) Titulaire: NACAM FRANCE SA, 41100 Vendôme (FR)
(72) Inventeur: Chartrain, Michel, 41360 Lunay (FR); Gallou, Laurent, 41100 Vendome (FR)
(74) Mandataire: Martinet & Lapoux

(56) Documents cités:
- FR-A- 2 737 172

## Description

La présente invention se rapporte à un dispositif de maintien en position d'un système de serrage de deux éléments. Le système de serrage a un axe de serrage, qui traverse chacun des deux éléments. Ce dispositif de maintien en position est notamment applicable à une colonne de direction de véhicule automobile, cette colonne de direction étant réglable en hauteur et/ou en profondeur dans le plan vertical.

Dans une colonne de direction réglable de véhicule automobile, le système de réglage en hauteur dans le plan vertical, ou en profondeur dans le plan vertical, demande un maintien de la position choisie par le conducteur. Dans les dispositifs connus, il est prévu d'ajouter au système de serrage du système de réglage en position un dispositif de dents métalliques, qui sont reliées à chacun des éléments insérés, de manière que les dents mécaniques rentrent en contact les unes dans les autres, afin qu'elles garantissent ainsi le maintien de la position choisie. Cependant lors du serrage, il peut se produire une présentation de dent sur dent, ce qui entraîne des craquements puis des claquements des flans des dents les unes contre les autres. De tels phénomènes sont préjudiciables à la tenue mécanique du dispositif, et donnent une impression d'insécurité au conducteur.

Le but de la présente invention est de proposer un dispositif de maintien en position d'un système de serrage entre deux éléments. Le dispositif s'applique notamment au système de serrage d'un système de réglage d'une colonne de direction de véhicule automobile. Le but de la présente invention est également de présenter un dispositif de maintien en position qui évite les inconvénients décrits ci-dessus, et qui s'intègre facilement dans les colonnes de direction existantes, tout en garantissant le maintien en position du système de serrage considéré.

Selon l'invention, le dispositif de maintien en position d'un premier élément par rapport à un deuxième élément a une structure, dans laquelle le premier élément et le deuxième élément sont reliés par un système de serrage qui traverse les premier et deuxième éléments.

Le dispositif de maintien en position est caractérisé en ce qu'il comporte :
- un patin d'adhérence en matière plastique relativement molle, ledit patin d'adhérence étant fixé sur le deuxième élément et étant traversé par l'axe de serrage ; et
- une crémaillère métallique munie de dents, ladite crémaillère étant agencée sur une embase, qui est montée sur l'axe de serrage ;
de manière que, lors du blocage en position verrouillée du système de serrage, les dents de ladite crémaillère viennent pénétrer dans la matière plastique relativement molle du patin d'adhérence afin de garantir le maintien en position du premier élément par rapport au deuxième élément.

Avantageusement, selon l'invention, le dispositif de maintien en position comporte une crémaillère qui a une structure décrite ci-après.

L'embase de la crémaillère métallique comporte deux ailes qui sont situées respectivement sur les côtés de ladite crémaillère. Chacune des deux ailes est disposée le long de la crémaillère, les deux ailes étant sensiblement perpendiculaires à l'embase de manière à obtenir un étrier.

La distance entre les deux ailes de l'étrier est supérieure à la largeur du patin d'adhérence de façon que, lorsque le système de serrage est bloqué à sa position verrouillée, les ailes de l'étrier viennent entourer le patin d'adhérence et viennent s'appuyer contre le deuxième élément afin d'obtenir une butée positive du système de serrage.

De plus afin de faciliter les opérations de réglage en position du dispositif de maintien en position, il comporte un ressort de rappel propre à rappeler en position déverrouillée le système de serrage de manière que, lors du déblocage du système de serrage, les dents de la crémaillère ressortent du patin d'adhérence. Le ressort de rappel est monté sur l'axe de serrage et disposé entre l'embase de l'étrier et le patin d'adhérence.

Afin de garantir une bonne tenue du dispositif de maintien en position selon l'invention, et d'éviter toute possibilité de fluage du plastique du patin d'adhérence, les deux ailes de l'étrierviennent en contact sur la face correspondante du deuxième élément, afin d'assurer une butée franche. La distance entre les deux ailes de l'étrier est très légèrement supérieure à la largeur du patin d'adhérence.

De cette façon, il est possible de contrôler et de limiter la déformation dudit patin d'adhérence lors du blocage en position verrouillée du système de serrage.

Le dispositif de maintien en position selon l'invention peut notamment s'appliquer à une colonne de direction de véhicule automobile. Dans cette structure :
- le premier élément est un tube-corps de colonne de direction de véhicule automobile, la colonne de direction étant réglable en hauteur et/ou en profondeur dans le plan vertical,
- un arbre de direction est monté libre en rotation dans le tube-corps,
- le deuxième élément est un élément support fixé à un châssis du véhicule ; et
- un système de réglage pour régler en position la colonne de direction est prévu de manière que le premier élément soit disposé dans le deuxième élément, le premier élément soit placé à une position désirée par rapport au deuxième élément au moyen du système de réglage et le premier élément soit bloqué par rapport au deuxième élément en position verrouillée par le système de serrage.

Dans une structure particulièrement intéressante du dispositif de maintien en position, le patin d'adhérence est constitué par une plaque qui comporte :
- une face d'appui, qui est munie de plots de fixation qui sont propres à entrer dans des trous correspondants du deuxième élément,
- deux faces de contact, qui sont orientées dans la direction de réglage, et qui sont disposées de part et d'autre d'un trou oblong dans la plaque à travers lequel l'axe de serrage passe et permettant le débattement dudit axe de serrage lors du réglage en position ; et
- deux protubérances supportant respectivement les deux faces de contact, afin de permettre la pénétration des dents de la crémaillère dans les deux faces de contact.

Le dispositif de maintien en position a un étrier qui comporte :
- l'embase qui est munie d'un trou de passage à travers lequel passe l'axe de serrage,
- la crémaillère qui comporte deux chemins munis de dents, les chemins étant orientés suivant la direction de réglage et s'étendant de part et d'autre du trou de passage ; et
- les ailes qui sont disposées aux extrémités de l'embase et le long des chemins munis de dents, afin Que l'étrier ait une section en forme de U.

Le dispositif de maintien en position a un ressort de rappel qui est en tôle souple. Le ressort de rappel comporte :
- un trou à travers lequel l'axe de serrage passe, ménagé dans une portion centrale du ressort de rappel qui est disposée contre l'embase de l'étrier, et
- des portions recourbées souples qui s'étendent de part et d'autre de la portion centrale ; les portions recourbées souples venant s'appuyer sur le patin d'adhérence entre les deux faces de contacts,
- le ressort de rappel étant dimensionné pour être disposé entre les deux chemins munis de dents de l'embase de l'étrier et entre les deux faces de contact du patin d'adhérence.

Le dispositif de maintien en position d'un système de serrage de deux éléments selon l'invention, permet d'assurer le réglage radial et/ou axial, tout en éliminant les problèmes de dent sur dent, de craquement, de fluage du plastique existant sur les systèmes actuels, ainsi que de garantir un serrage positif par la pénétration des dents dans du plastique mou une fois le système en position verrouillée.

D'autres caractéristiques et avantages de l'invention ressortiront de la description suivante de plusieurs réalisations de l'invention, données à titre d'exemples nullement limitatifs, en référence aux dessins annexés dans lesquels :
- la figure 1 est une vue en perspective cavalière d'un dispositif de maintien en position selon l'invention d'un système de serrage de deux éléments appartenant à une colonne de véhicule automobile ;
- la figure 2 est une coupe prise suivant la ligne II-II de la figure 1, en position déverrouillée ;
- la figure 3 est une vue analogue à la figure 2, en position verrouillée ;
- la figure 4 est un détail de la figure 3 ;
- la figure 5 est une vue en perspective cavalière de l'étrier représenté sur la figure 1 ;
- la figure 6 est une vue de dessus de l'étrier de la figure 5;
- la figure 7 est une coupe prise suivant la ligne VII-VII de la figure 6 ;
- la figure 8 est une coupe prise suivant la ligne VIII-VIII de la figure 8 ;
- la figure 9 est une vue du patin d'adhérence représenté sur la figure 1 ;
- la figure 10 est une coupe prise suivant la ligne X-X de la figure 9 ;
- la figure 11 est une coupe prise suivant la ligne XI-XI de la figure 9 ; et
- la figure 12 est une vue de la face d'appui du patin d'adhérence.

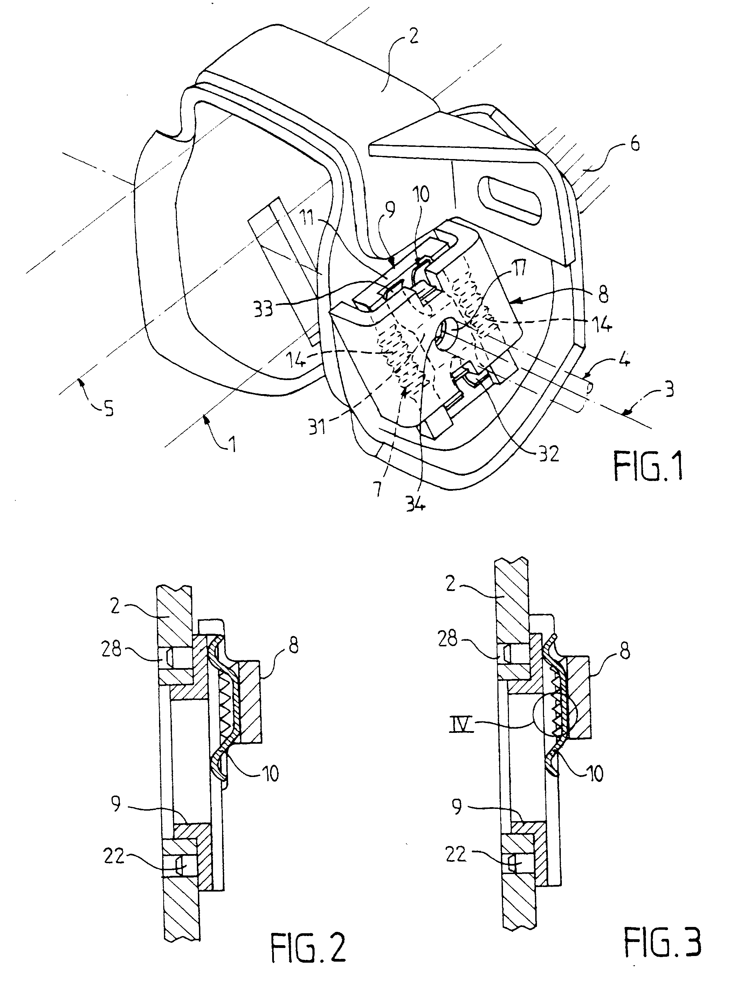

Comme on peut le voir sur les figures 1 à 5, le dispositif de maintien en position selon l'invention se rapporte au maintien en position d'un premier élément 1 par rapport à un deuxième élément 2. L'élément 1 et l'élément 2 sont reliés par un système de serrage 3. Ce système de serrage 3 a un axe de serrage 4, qui traverse les éléments 1 et 2.

Le dispositif de maintien en position comporte essentiellement un patin d'adhérence 9 et une crémaillère métallique 7. Le patin d'adhérence 9 est en matière plastique relativement molle. Le patin d'adhérence 9 est fixé sur l'élément 2, et est traversé par l'axe de serrage 4. La crémaillère métallique 7 est munie de dents 14. La crémaillère 7 est agencée sur une embase 11, qui est montée sur l'axe de serrage 4. Le patin d'adhérence 9 et la crémaillère métallique 7 sont disposés l'un par rapport à l'autre de manière que, lors du blocage en position verrouillée du système de serrage 3, les dents 14 de la crémaillère 7 viennent pénétrer dans le plastique mou du patin d'adhérence 9, afin de garantir le maintien en position de l'élément 1 par rapport à l'élément 2.

L'embase 11 de la crémaillère métallique 7 comporte deux ailes référencées 12 et 13. Chacune de ces ailes 12 et 13 est située à un côté respectif de la crémaillère 7, et chaque aile 12 et 13 est disposée le long de ladite crémaillère 7. Les deux ailes 12 et 13 sont sensiblement perpendiculaires à l'embase 11 de manière à obtenir un étrier 8.

La distance entre les deux ailes 12 et 13 de l'étrier 8 est supérieure à la largeur du patin d'adhérence 9 de façon que, lors du blocage en position verrouillée du système de serrage 3, les ailes 12 et 13 de l'étrier 8 viennent entourer le patin d'adhérence 9 et viennent s'appuyer contre l'élément 2, afin d'obtenir une butée positive du système de serrage 3.

La distance entre les deux ailes 12 et 13 de l'étrier 8 est de plus très légèrement supérieure à la largeur du patin d'adhérence 9, de manière à contrôler et à limiter la déformation dudit patin d'adhérence 9 lors du blocage en position verrouillée du système de serrage 3.

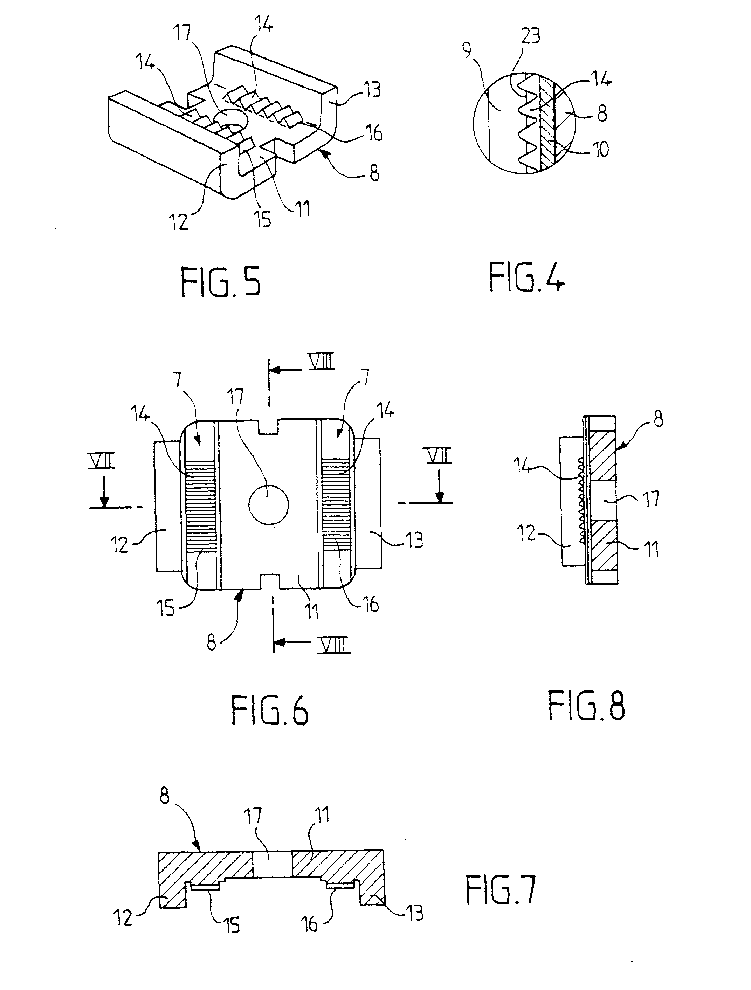

Afin de permettre un rappel aisé en position déverrouillée du système de serrage, le dispositif de maintien en position selon l'invention comporte un ressort de rappel 10. Ce ressort de rappel 10 est agencé de manière que lors du déblocage du système de serrage 3, les dents 14 de la crémaillère 7 ressortent du patin d'adhérence 9. Le ressort de rappel 10 est monté sur l'axe de serrage 4 et est disposé entre l'embase 11 de l'étrier 8 et le patin d'adhérence 9. L'ensemble du dispositif de maintien en position selon l'invention est représenté en position déverrouillée sur la figure 2, en position verrouillée sur la figure 3. La figure 4 montre clairement la pénétration des dents 14 de la crémaillère 7 dans le patin d'adhérence 9.

Le dispositif de maintien en position selon l'invention s'applique notamment à une colonne de direction de véhicule automobile, dans laquelle :
- le premier élément 1 est un tube-corps de colonne de direction de véhicule automobile, ladite colonne étant réglable en hauteur et/ou en profondeur dans le plan vertical ;
- un arbre de direction 5 est monté libre en rotation dans le tube-corps ;
- le deuxième élément 2 est un élément support fixé au châssis du véhicule 6 ;
- un système de réglage en position de la colonne de direction est agencé de manière que le tube-corps ou élément 1 soit disposé dans l'élément support ou élément 2, l'élément 1 soit placé à la position désirée par rapport à l'élément 2 au moyen du système de réglage, et l'élément 1 soit bloqué par rapport à l'élément 2 en position verrouillée par le système de serrage 3.

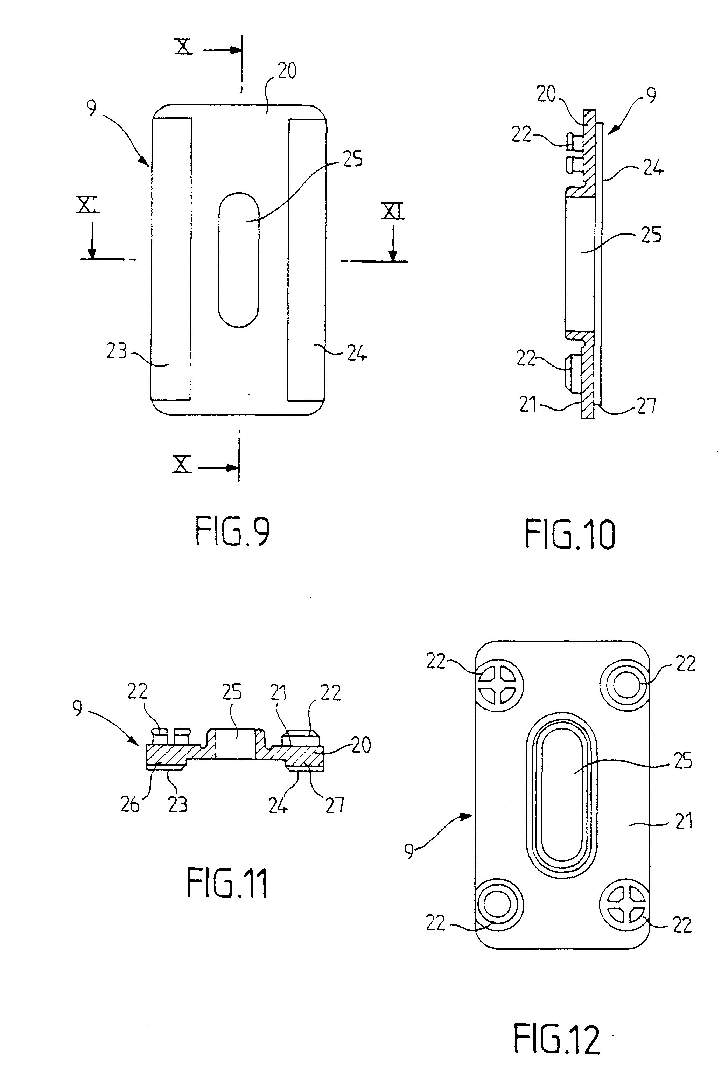

Comme on peut le voir sur les figures 9 à 12, le patin d'adhérence 9 est constitué par une plaque 2C. Cette plaque 20 comporte :
- une face d'appui 21, qui est munie de plots de fixation 22, qui rentrent dans des trous 28 correspondants aménagés sur l'élément 2 ;
- deux faces de contact 23 et 24 qui sont orientées dans la direction de réglage, et qui sont disposées de part et d'autre d'un trou oblong 25 de la plaque 20 permettant le passage de l'axe 4 du système de serrage, et le débattement dudit axe 4 lors du réglage en position ;
- deux protubérances 26 et 27 supportant respectivement les deux faces de contact 23 et 24, afin de permettre la pénétration des dents 14 de la crémaillère 7 dans les deux faces de contact 23 et 24.

Comme on peut le voir sur les figures 6 à 8, l'étrier 8 comporte :
- l'embase 11 qui est munie d'un trou 17 à travers lequel l'axe de serrage 4 passe ;
- la crémaillère 7, qui comporte deux chemins 15 et 16 qui sont munis des dents 14 ; ; chacun des chemins 15 et 16 est orienté dans la direction de réglage et est aménagé sur un côté respectif du trou de passage 17 ;
- chacune des ailes 12 et 13 qui est disposée à une extrémité respective de l'embase 11 et le long du chemin respectif 15, 16 muni de dents 14, de manière à avoir un étrier 8 ayant une section en forme de U.

Comme on peut le voir sur les figures 1 à 3, le ressort de rappel 10 est en tôle souple. Le ressort de rappel 10 comporte :
- un trou 34 ménagé dans une portion centrale 31 du ressort, à travers lequel l'axe de serrage 4 passe, qui est disposée contre l'étrier 8 ;
- des portions recourbées souples 32 et 33, qui sont agencées de part et d'autre de la portion centrale 31 et qui s'appuient sur le patin d'adhérence 9 entre les deux faces de contact 23 et 24.

Le ressort de rappel 10 est dimensionné pour être disposé entre les deux chemins 15 et 16 qui sont munis des dents 14 de l'étrier 8, et entre les deux faces de contact 23 et 24 du patin d'adhérence 9.

Ainsi les dents 14 de la crémaillère métallique 7 viennent pénétrer dans le patin d'adhérence 9, ce qui assure un serrage positif du système de réglage de la colonne de direction. Cet artifice de pénétration des dents 14 dans le patin d'adhérence 9 qui est lisse, permet de s'affranchir des problèmes de dent sur dent, ainsi que des craquements existants sur les systèmes de serrage à crémaillère dent sur dent actuels.

De plus, l'intérêt d'un patin d'adhérence 9 en matière plastique molle et lisse permet de réduire les aspects de coût et entraîne un allégement. Il permet également de résister à des cycles importants de verrouillage-déverrouillage du système, et ceci pendant toute la durée de vie du véhicule, sans détruire le patin d'adhérence 9 en matière plastique.

L'utilisation d'un patin d'adhérence 9 en matière plastique engendre un problème de relaxation du plastique sous contrainte, qui est contrôlé et annulé par l'étrier 8 équipant la crémaillère 7. Effectivement, lors du serrage, les dents 14 de la crémaillère 7 en acier viennent s'enfoncer dans le patin d'adhérence 9 en plastique lisse jusqu'à ce que l'étrier 8 vienne en contact sur la face correspondante de l'élément 2, afin d'assurer une butée franche. Cet appui de l'étrier 8 par une face de l'élément 2 permet d'avoir un appui positif et donc d'éviter de perdre de la tension dans le système de serrage, qui pourrait être induit par le phénomène de relaxation existant sur toute matière plastique.

L'agencement selon l'invention garantit ainsi toujours la bonne tenue de la colonne de direction sous effort appliqué au niveau du volant par le conducteur. De plus par le contact de l'étrier 8 sur la face correspondante de l'élément 2 passe une partie de l'effort nécessaire à la bonne tenue de la colonne de direction une fois le système verrouillé.

## Revendications

1. Dispositif de maintien en position d'un premier élément (1) par rapport à un deuxième élément (2), les premier élément (1) et deuxième élément (2) étant reliés par un système de serrage (3) ayant un axe de serrage (4) traversant les premier et deuxième éléments, **caractérisé en ce qu'**il comprend :
- un patin d'adhérence (9) en matière plastique relativement molle, ledit patin d'adhérence (9) étant fixé sur le deuxième élément (2) et étant traversé par l'axe de serrage (4), et
- une crémaillère métallique (7) munie de dents (14), ladite crémaillère (7) étant agencée sur une embase (11), qui est montée sur l'axe de serrage (4),
de manière que, lors du blocage en position verrouillée du système de serrage (3) , les dents (14) de ladite crémaillère (7) viennent pénétrer dans la matière plastique relativement molle du patin d'adhérence (9) afin de garantir le maintien en position du premier élément (1) par rapport au deuxième élément (2).

2. Dispositif de maintien en position selon la revendication 1, **caractérisé en ce que** :
- l'embase (11) de la crémaillère métallique (7) comporte des ailes respectives (12, 13) sur les cotés de la crémaillère (7), chacune des ailes (12, 13) s'étendant le long de ladite crémaillère (7) et étant sensiblement perpendiculaires à ladite embase (11) de manière à former un étrier (8), et
- la distance entre les deux ailes (12, 13) de l'étrier (8) est supérieure à la largeur du patin d'adhérence (9) de façon que, lors du blocage en position verrouillée du système de serrage (3), les ailes (12, 13) de l'étrier (8) viennent entourer le patin d'adhérence (9) et viennent s'appuyer contre le deuxième élément (2) afin d'obtenir une butée positive du système de serrage (3).

3. Dispositif de maintien en position selon la revendication 2, **caractérisé en ce que** la distance entre les ailes (12-13) de l'étrier (8) est très légèrement supérieure à la largeur du patin d'adhérence (9), de manière à contrôler et à limiter la déformation dudit patin d'adhérence (9) lors du blocage en position verrouillée du système de serrage (3).

4. Dispositif de maintien en position selon l'une quelconque des revendications 1 à 3, **caractérisé en ce qu'**il comporte un ressort de rappel (10) propre à rappeler en position déverrouillée le système de serrage de manière que, lors du déblocage du système de serrage (3), les dents (14) de la crémaillère (7) ressortent du patin d'adhérence (9) ; le ressort de rappel (10) étant monté sur l'axe de serrage (4) et disposé entre l'embase (11) et le patin d'adhérence (9).

5. Dispositif de maintien en position selon l'une quelconque des revendications précédentes **caractérisé en ce que** :
- le premier élément (1) est un tube-corps de colonne de direction de véhicule automobile, ladite colonne de direction étant réglable en hauteur et/ou en profondeur dans le plan vertical,
- un arbre de direction (5) est monté libre en rotation dans ledit tube-corps,
- le deuxième élément (2) est un élément support fixé à un châssis du véhicule (6) ; et
- un système de réglage pour régler en position la colonne de direction est prévu de manière que le premier élément (1) soit disposé dans le deuxième élément (2), le premier élément (1) soit placé à une position désirée par rapport au deuxième élément (2) au moyen du système de réglage et le premier élément (1) soit bloqué par rapport au deuxième élément (2) en position verrouillée par le système de serrage (3).

6. Dispositif de maintien en position selon la revendication 5, **caractérisé en ce que** le patin d'adhérence (9) comprend une plaque (20) qui comporte
- une face d'appui (21), qui est munie de plots de fixation (22) qui sont propres à entrer dans des trous (28) correspondants du deuxième élément (2),
- deux faces de contact (23, 24) qui sont disposées de part et d'autre d'un trou oblong (25) à travers lequel l'axe de serrage (4) passe et permettant le débattement dudit axe de serrage (4) lors du réglage en position, et
- deux protubérances (26, 27) supportant respectivement les deux faces de contact (23, 24), afin de permettre la pénétration des dents (14) de la crémaillère (7) dans les deux faces de contact (23, 24).

7. Dispositif de maintien en position selon la revendication 5 ou 6 lorsqu'elle dépend de la revendication 2 ou 3, **caractérisé en ce que** l'étrier (8) comporte :
- l'embase (11) qui est munie d'un trou (17) à travers lequel l'axe de serrage(4) passe ;
- la crémaillère (7) qui comporte deux chemins (15, 16) munis de dents (14) ; les chemins (15, 16) s'étendant de part et d'autre du trou (17) ; et
- les ailes (12, 13), qui sont respectivement disposées à des extrémités de l'embase (11) et le long des chemins (15, 16) munis de dents (14), afin que ledit étrier (8) ait une section en forme de U.

8. Dispositif de maintien en position selon l'une quelconque des revendications 1 à 7, comprenant un ressort de rappel (10) qui est en tôle souple et qui comporte :
- un trou (34) à travers lequel l'axe de serrage (4) passe, ménagé dans une portion centrale (31) du ressort de rappel qui est disposée contre l'embaase (11) ; et
- des portions recourbées souples (32, 33) qui s'étendent de part et d'autre de ladite portion centrale (31) ; les portions recourbées souples (32, 33) venant s'appuyer entre deux faces de contacts (23, 24) sur le patin d'adhérence (9),
- le ressort de rappel (10) étant dimensionné pour être disposé entre les deux chemins (15, 16) munis de dents (14) de l'embase (11) et entre les deux faces de contact (23, 24) du patin d'adhérence (9).

## Patentansprüche

1. Vorrichtung zum Halten der Position eines ersten Elementes (1) relativ zu einem zweiten Element (2), wobei das erste (1) und das zweite Element (2) durch ein Klemmsystem (3) verbunden sind, das über eine Klemmachse (4) verfügt, die das erste und das zweite Element durchquert, **dadurch gekennzeichnet, dass** es umfasst:
- einen Haftschuh (9) aus relativ weichem Kunststoff, wobei der genannte Haftschuh (9) auf dem zweiten Element (2) befestigt ist und von der Klemmachse (4) durchquert wird, und
- eine mit Zähnen (14) versehene Zahnstange aus Metall (7), wobei die genannte Zahnstange (7) auf einer Grundplatte (11) angeordnet ist, die auf der Klemmachse (4) angebracht ist, derart, **dass** die Zähne (14) der genannten Zahnstange (7) bei Verriegelung des Klemmsystems (3) in der Klemmstellung in den relativ weichen Kunststoff des Haftschuhes (9) eindringen, um das Halten der Position des ersten Elementes (1) relativ zum zweiten Element (2) zu garantieren.

2. Vorrichtung zum Halten der Position nach Patentanspruch 1, **dadurch gekennzeichnet, dass**:
- die Grundplatte (11) der Zahnstange aus Metall (7) an den Seiten der Zahnstange (7) Flügel (12, 13) aufweist, wobei jeder dieser Flügel (12, 13) sich über die Länge der genannten Zahnstange (7) erstreckt und auf der genannten Grundplatte (11) im wesentlichen senkrecht steht, so **dass** ein Bügel (8) ausgebildet wird, und
- der Abstand zwischen den beiden Flügeln (12, 13) des Bügels (8) größer ist, als die Breite des Haftschuhes (9), so **dass** die Flügel (12, 13) des Bügels (8) bei der Verriegelung des Klemmsystems (3) in der Klemmstellung den Haftschuh (9) einschließen und sich an das zweite Element (2) andrücken, um einen kraftschlüssigen Anschlag des Klemmsystems (3) zu erhalten.

3. Vorrichtung zum Halten der Position nach Patentanspruch 2, **dadurch gekennzeichnet, dass** der Abstand zwischen den Flügeln (12-13) des Bügels (8) geringfügig größer ist, als die Breite des Haftschuhes (9), um die Verformung des genannten Haftschuhes (9) bei der Verriegelung in der Klemmstellung des Klemmsystems (3) zu kontrollieren und zu begrenzen.

4. Vorrichtung zum Halten der Position nach irgendeinem der Patentansprüche 1 bis 3, **dadurch gekennzeichnet, dass** sie eine Rückstellfeder (10) umfasst, die geeignet ist, das Klemmsystem in die offene Stellung zurückzubringen, so **dass** die Zähne (14) der Zahnstange (7) bei Öffnung des Klemmsystems (3) wieder aus dem Haftschuh (9) heraustreten, wobei die Rückstellfeder (10) auf der Klemmachse (4) montiert und zwischen der Grundplatte (11) und dem Haftschuh (9) angeordnet ist.

5. Vorrichtung zum Halten der Position nach irgendeinem der vorangehenden Patentansprüche, **dadurch gekennzeichnet, dass**:
- das erste Element (1) ein Rohrkörper einer Kraftfahrzeuglenksäule ist, wobei die genannte Lenksäule in Höhe und/oder Tiefe in der vertikalen Ebene einstellbar ist,
- eine Lenkwelle (5) drehbar im genannten Rohrkörper angeordnet ist,
- das zweite Element (2) ein an der Karosserie des Fahrzeugs (6) befestigtes Tragelement ist, und
- ein System zur Einstellung der Position der Lenksäule derart vorgesehen ist, **dass** das erste Element (1) im zweiten Element (2) angeordnet ist, **dass** das erste Element (1) mit Hilfe des Einstellsystems in eine gewünschte Position relativ zum zweiten Element (2) gebracht wird und das erste Element (1) relativ zum zweiten Element (2) durch das Klemmsystem (3) in der Klemmstellung verriegelt wird.

6. Vorrichtung zum Halten der Position nach Patentanspruch 5, **dadurch gekennzeichnet, dass** der Haftschuh (9) eine Platte (20) umfasst, die aufweist:
- eine Andruckfläche (21), die mit Befestigungsstiften (22) versehen ist, die geeignet sind, in entsprechende Löcher (28) des zweiten Elementes (2) einzutreten,
- zwei Berührungsflächen (23, 24), die beiderseits eines Langloches (25) angeordnet sind, durch das die Klemmachse (4) hindurchtritt und das die Verschiebbarkeit der genannten Klemmachse (4) bei der Positionseinstellung ermöglicht, und
- zwei Vorsprünge (26, 27), die jeweils eine der beiden Berührungsflächen (23, 24) tragen, um das Eindringen der Zähne (14) der Zahnstange (7) in die beiden Berührungsflächen (23, 24) zu erlauben.

7. Vorrichtung zum Halten der Position nach Patentanspruch 5 oder 6, wenn er von Patentanspruch 2 oder 3 abhängt, **dadurch gekennzeichnet, dass** der Bügel (8) umfasst:
- die Grundplatte (11), die mit einem Loch (17) versehen ist, durch das die Klemmachse (4) hindurchtritt,
- die Zahnstange (7), die zwei mit Zähnen (14) versehene Bahnen (15, 16) aufweist, die beiderseits des Loches (17) verlaufen, und
- die Flügel (12, 13) die jeweils an einem Ende der Grundplatte (11) und über die Länge der mit Zähnen (14) versehenen Bahnen (15, 16) angeordnet sind, damit der genannte Bügel (8) einen U-förmigen Querschnitt hat.

8. Vorrichtung zum Halten der Position nach irgendeinem der Patentansprüche 1 bis 7, eine Rückstellfeder (10) umfassend, die aus nachgiebigem Blech besteht und aufweist:
- ein Loch (34), durch das die Klemmachse (4) hindurchtritt, das in einem zentralen Bereich (31) der Rückstellfeder ausgebildet ist, der an der Grundplatte (11) anliegend angeordnet ist, und
- nachgiebige, umgebogene Bereiche (32, 33), die beiderseits des genannten zentralen Bereiches (31) liegen und die sich zwischen den beiden Berührungsflächen (23, 24) an den Haftschuh (9) anlegen,
- wobei die Rückstellfeder (10) geeignet dimensioniert ist, um zwischen den beiden mit Zähnen (14) versehenen Bahnen (15, 16) der Grundplatte (11) und zwischen den beiden Berührungsflächen (23, 24) des Haftschuhes (9) angeordnet zu werden.

## Claims

1. Device for holding a first member (1) in position relative to a second member (2), the first member (1) and the second member (2) being connected by a clamping system (3), said clamping system (3) having a clamping axle (4) passing through the first and second members, **characterized in that** said device includes :
- an adhesion shoe (9) made in relatively soft plastics material, said adhesion shoe (9) being fixed to the second member (2) and being passed by the clamping axle (4) ;
- a metal rack (7) having teeth (14), said rack (7) being arranged on a base (11) which is mounted on the clamping axle (4) ;
whereby, when the clamping system (3) is immobilized in a locked position, the teeth (14) of said rack (7) penetrate the relatively soft plastics material of said adhesion shoe (9) in order to guarantee that the first member (1) is held in position relative to the second member (2).

2. A position holding device according to claim 1, **characterized in that** :
- the base (11) of the metal rack (7) includes respective flange (12) and (13) which are located on each side of the rack (7), each of the two flanges (12, 13) being disposed along said rack (7) and being substantially perpendicular to said base (12) in order to form a stirrup member (8) ;
- the distance between the two flanges (12, 13) of the stirrup member (8) is greater than the width of the adhesion shoe (9) so that, when the clamping system (3) is immobilized in the locked position, the flanges (12, 13) of the stirrup member (8) surround the adhesion shoe (9) and bear against the second member (2) to assure positive abutment of the clamping system (3).

3. A position holding device according to claim 2, **characterized in that** the distance between the two flanges (12-13) of the stirrup member (8) is very slightly greater than the width of the adhesion shoe (9), so as to control and to limit deformation of said adhesion shoe (9) when the clamping system (3) is immobilized in the locked position.

4. A position holding device according to anyone of claims 1 to 3, **characterized in that** it includes a return spring (10) for biasing the clamping system to an unlocked position so that, when the clamping system (3) is released, the teeth (14) of the rack (7) emerge from the adhesion shoe (9) ; the return spring (10) being mounted on the clamping axle (4) and disposed between the base (11) of the stirrup member (8) and the adhesion shoe (9).

5. A position holding device according to any one of preceding claims **characterized in that** :
- the first member (1) is a body tube of automobile vehicle steering column, said column being adjustable heightwise and/or depthwise in a vertical plane ;
- a steering shaft (5) is mounted to rotate freely in said body tube ;
- the second member (2) is a support member fixed to a chassis of the vehicle (6) ;
- a system is provided for adjusting position of the steering column such that the first member (1) is disposed in the second member (2), that the first member (1) is placed at the wished position relative to the second member (2) by means of the adjustment system, and that the first member (1) is immobilized relative to the second member (2) in the locked position by the clamping system (3).

6. A position holding device according to claim 5, **characterized in that** the adhesion shoe (9) is constituted by a plate (20) which has:
- a bearing face (21) which is provided with fixation lugs (22) to enter corresponding holes (28) in the second member (2);
- two contact faces (23, 24) which are disposed on opposite sides of an oblong hole (25) through which the clamping axle (4) passes and allowing movement of said clamping axle (4) during adjustment of position;
- two protuberances carrying respectively the two contact faces (23-24) to enable penetration of the teeth (14) of the rack (7) into the two contact faces (23-24).

7. A position holding device according to claim 5, or to claim 6 and claim 2 or 3 **characterized in that** the stirrup member (8) comprises :
- the base (11) which includes a hole (17) through which the clamping axle (4) passes;
- the rack (7) which has two tracks (15, 16) provided with teeth (14) ; each of the tracks (15, 16) being made on respective sides of the hole (17); and
- the flanges (12, 13) which are disposed at the ends of the base (11) and along the tracks (15, 16) provided with teeth (14), whereby the stirrup member (8) has a U-section.

8. A position holding device according to anyone of claims 1 to 7, **characterized in that** the return spring (10) is made in flexible sheet and includes:
- a hole (34) through which passes the clamping axle (4), in a central portion (31) which is disposed against the base (11);
- flexible curved portions (32, 33) extending on opposite sides of said central portion (31) ; the flexible curved portions (32, 33) bearing on the adhesion shoe (9) between two contact faces (23, 24);
- the return spring (10) being dimensioned to be disposed between the two tracks (15, 16) provided with teeth (14) of the base (11) and between the two contact faces (23, 24) of the adhesion shoe (9).
